# EUROPEAN PATENT SPECIFICATION

(11) **EP 3 962 625 B1**
(45) Date of publication and mention of the grant of the patent: **10.07.2024**
(21) Application number: 20727771.6
(22) Date of filing: 01.05.2020
(51) Int. Cl.: B01D 19/04

(54) **METHOD OF USE OF NON-AQUEOUS DEFOAMER COMPOSITIONS TO CONTROL FOAMING OF NON-AQUEOUS FOAMS**
VERFAHREN ZUR VERWENDUNG NICHTWÄSSRIGER ENTSCHÄUMERZUSAMMENSETZUNGEN ZUR SCHAUMKONTROLLE NICHTWÄSSRIGER SCHAUMSTOFFE
PROCÉDÉ D'UTILISATION DE COMPOSITIONS ANTIMOUSSE NON AQUEUSES POUR RÉGULER LE MOUSSAGE DE MOUSSES NON AQUEUSES

(30) Priority: 03.05.2019 US 201962842665 P
(43) Date of publication of application: 09.03.2022
(73) Proprietor: Sasol Chemie GmbH & Co. KG, 20537 Hamburg (DE)
(72) Inventor: VARADARAJ, Ramesh, Houston, TX 77079 (US); JAMES, Ollie, Westlake, LA 70669 (US); LANDRY, Dustin, Westlake, LA 70669 (US)
(74) Representative: Müller Schupfner & Partner Patent- und Rechtsanwaltspartnerschaft mbB (Hamburg)
(86) International application number: PCT/US2020/030936
(87) International publication number: WO 2020/227055

(56) References cited:
- EP-A1- 0 709 450
- US-A1- 2014 155 312
- US-A1- 2018 208 876
- US-A1- 2019 099 720

## Description

The present invention relates to a method of using defoamer, antifoamer and / or deaeration compositions for the defoaming of non-aqueous foams, the prevention of foam formation and / or the deaeration of feeds. More specifically, the compositions relate to non-ionic surfactants, specifically 2-alkyl-1-alkanol alkoxylates together with a solvent, to be used as additives for foam destruction, foam prevention or deaeration of non-aqueous phases.

### BACKGROUND OF THE INVENTION AND DISCUSSION OF THE PRIOR ART

Refineries and chemical processing plants have had the long standing problem of controlling non-aqueous foams in reactor vessels. These foams are a result of gaseous products that form for instance during processing of feeds such as crude oils in refineries. Illustrative examples of industrial processing units requiring non-aqueous foam control include delayed coker units in refineries, aldehyde recovery units in synthesis gas processing, crude oil / gas separators, and metal working processes requiring non-aqueous lubrication. Current methods to control foam include mechanical means such as use of baffles and mixing control systems. In conjunction, chemical defoamers or antifoamers are often used. Well known antifoamers include silicone oils, linseed oil, as well as block copolymers of lower alkylene glycols. The most widely used defoamers comprise poly dimethyl siloxane (PDMS). PDMS is used "as is" or mixed with hydrophobic silica to form non-aqueous defoamer compositions, as described for example in BASF's EP1025757B1. The main drawback associated with the use of PDMS is the introduction of silicon into the hydrocarbon product. This is undesirable as silicon can poison refining catalysts such as hydrotreating and desulfurization catalysts. US 20140155312 A1 discloses a detergent emulsifier for laundry using an alkylphenol ethoxylate free surfactant blend. US 2018208876 A1 discloses surfactants and cleaning compositions, such as hard surface cleaners, warewash detergents and rinse aids. Some non-silicon defoamers have been proposed in the prior art, such as high molecular polypropoxylates or butyl, nonyl-phenol based block polyalkoxylates (US2006/0025324), but there is an ongoing need and search for simple, low concentration and low cost non-silicon based, non-aqueous defoamers, antifoamers and / or deaerators for application in the chemical and industrial process industry.

Useful application areas include, but is not limited to, technology areas such as oil and gas, agrochemical, fermentation, water treatments, pulp and paper, metalworking fluids, paints and coatings, emulsion polymerization and construction.

### OBJECT OF THE PRESENT INVENTION

The advantage of the method of use of compositions as described is the provision of novel, non-silicon based compositions for the effective defoaming, antifoaming and deaeration of various non-aqueous feeds.

### SUMMARY OF THE INVENTION

The present disclosure relates to a range of 2-alkyl-1-alkanol alkoxylates (or so-called Guerbet-alcohol derived alkoxylates) that, together with the use of a solvent, are effective as antifoamers, defoamers and deaerators of non-aqueous phases.

The present invention teaches the use of compositions for defoaming non-aqueous foams, the prevention of foam formation and / or the deaeration of various feeds, wherein said non-aqueous foam comprises a non-aqueous phase and a gas, and wherein said composition comprises at least:
i) a non-ionic surfactant, wherein said non-ionic surfactant has a molecular structure as shown in [I]:

   R¹-CH(R²)-CH₂-O-(A'O)ₘ(A"O)ₙ-H [I]

   wherein
   R¹ is a linear or branched alkyl group having from 5 to 16 carbon atoms, preferably from 9 to 16 carbon atoms,
   R² is a linear or branched alkyl group having from 5 to 16 carbon atoms, preferably from 9 to 16 carbon atoms,
   A'O is an ethoxy (EO) group,
   A"O is an ethoxy (EO) group,
   m = 0 - 10,
   n = 20 - 150, preferably 20 - 50, and
ii) a solvent.

The use of the composition is also specifically described wherein m = 0 and A"O is an ethoxy (EO) group.

The non-ionic surfactant preferably increases the interfacial tension (IFT) between the non-aqueous phase and the gas by at least 1 mN/m at temperatures from 20°C to about 350°C. The non-ionic surfactant is preferably stable up to 350°C.

In one embodiment of the invention, approximately 0.01 - 10 wt% of the non-ionic surfactant is insoluble in the non-aqueous phase of the foam.

The solvent preferably comprises a compound or mixture of compounds selected from the group of toluene, xylene, hexane, heptane, octane, nonane, decane, undecane, dodecane, diesel, ethanol, propanol, butanol, and pentanol.

Without limiting the scope of the invention, the non-aqueous foam comprises a gas, wherein the gas could be methane, ethane, propane, butane, pentane, air, nitrogen, carbon dioxide, carbon monoxide, hydrogen sulphide, hydrogen, argon or mixtures thereof.

In addition, the non-aqueous phase preferably comprises diesel, including Fischer-Tropsch derived diesel, crude oil or crude oil distillates, with carbon numbers ranging from 12 to 50, or mixtures thereof.

In one embodiment of the invention, the composition could further comprise solids, preferably ranging from 0.5 micron to 100 micron in size. The solids could be selected from silica, clay or mixtures thereof.

In a further embodiment of the invention, the non-ionic surfactant is stable from 20°C to at least 350°C.

The use of the composition is described wherein the addition of the non-ionic surfactant leads to an increase in effective foam reduction of between 50 and 100 %, preferably of between 60 and 100%, most preferably of between 70 and 100%. The effectiveness of the non-ionic surfactant is calculated as a percentage of the time measured for foam collapse when the non-ionic surfactant was added to the non-aqueous phase, relative to the time for foam collapse when no non-ionic surfactant was added to the non-aqueous phase.

The method according to the invention involves the defoaming a non-aqueous foam, where the non-aqueous foam comprises a non-aqueous phase and a gas, wherein the method comprises:
providing a composition comprising at least:
   i) a non-ionic surfactant, wherein said non-ionic surfactant has a molecular structure as shown in [I]:

      R¹-CH(R²)-CH₂-O-(A'O)ₘ(A"O)ₙ-H [I]

      wherein R¹ is a linear or branched alkyl group having from 5 to 16 carbon atoms, preferably from 9 to 16 carbon atoms,
      R² is a linear or branched alkyl group having from 5 to 16 carbon atoms, preferably from 9 to 16 carbon atoms,
      A'O is an ethoxy (EO) group,
      A"O is an ethoxy (EO) group,
      m = 0 - 10,
      n = 20 - 150, preferably 20 - 50,
   ii) a solvent; and
contacting said non-aqueous foam with said composition whereby said nonaqueous foam breaks.

The method of the invention further involves preventing foaming in a non-aqueous material or deaerating a nonaqueous material, said method comprising:
providing a composition comprising at least:
   i) a non-ionic surfactant, wherein said non-ionic surfactant has a molecular structure as shown in [I]:

      R¹-CH(R²)-CH₂-O-(A'O)ₘ(A"O)ₙ-H [I]

      wherein R¹ is a linear or branched alkyl group having from 5 to 16 carbon atoms, preferably from 9 to 16 carbon atoms,
      R² is a linear or branched alkyl group having from 5 to 16 carbon atoms, preferably from 9 to 16 carbon atoms,
      A'O is an ethoxy (EO) group,
      A"O is an ethoxy (EO) group,
      m = 0 - 10,
      n = 20 - 150, preferably 20 -50, and
   ii) a solvent; and
contacting said non-aqueous material with said composition whereby (a) foam is prevented from forming in said non-aqueous material, (b) said non-aqueous material is deaerated, or both (a) and (b).

### BRIEF DESCRIPTION OF THE DRAWINGS

Figure 1 shows the thermogravimetric data for alcohol ethoxylated ISOFOL 2426S - 50EO.
Figure 2 shows the thermogravimetric data for alcohol ethoxylated ISOFOL 32-54 EO.
Figure 3 shows the dynamic interfacial tension vs. bubble frequency for ISOFOL 2426S - 50EO and PDMS.
Figure 4 shows the influence of hydrocarbon chain structure on performance.
Figure 5 shows the influence of the number of EO groups on performance.
Figure 6 shows the influence of end capping the EO group with one PO group.
Figure 7 shows the effect of defoamer concentration on performance.
Figure 8 shows the influence of 2-alkyl-1-alkanol ethoxylate molecular structure.
Figure 9 shows a comparison of 2-alkyl-1-alkanol ethoxylate with PDMS and PPG polymers.
Figure 10 shows a comparison of 2-alkyl-1-alkanol ethoxylate with commercial defoamers.
Figure 11 shows the influence of temperature on performance.
Figure 12 shows a time lapse of defoaming.

### DETAILED DESCRIPTION OF PREFERRED EMBODIMENTS

The surfactant compositions of the present invention are effective defoamers, antifoamers and deaerators for a wide variety of non-aqueous phases. The performance of the compositions can be optimally designed by tailoring the hydrophobe structures of the compounds, together with the number of EO units, for a specific application area.

### Materials

A number of surfactants, namely ethoxylated alcohols, were synthesized by reacting an alcohol with ethylene oxide in the presence of a suitable catalyst. Such procedures are well known to those skilled in the art. In the examples below (and in preferred embodiments), the surfactants were prepared using the methods and catalysts described in US 8,329,609. Other well-known catalysts such as KOH or double metal cyanide (DMC) are also suitable for preparing the surfactants of the present invention. The compounds are described in Table 1:

**Table 1: Structure of ethoxylated alcohols**

| **Alcohol Trade Name** | **Alcohol carbon chain length** | **Alcohol structure** | **Number of ethylene oxide units (EO)** |
|---|---|---|---|
| ISOFOL2426S | C24-26 | 100% 2-alkyl branched | 150 |
| | | 2.16 branches per molecule | |
| ISOFOL2426S | C24-26 | 100% 2-alkyl branched | 100 |
| | | 2.16 branches per molecule | |
| ISOFOL2426S | C24-26 | 100% 2-alkyl branched | 50 |
| | | 2.16 branches per molecule | |
| ISOFOL2426S | C24-26 | 100% 2-alkyl branched | 20 |
| | | 2.16 branches per molecule | |
| ISOFOL12 | C12 | 100% 2-alkyl branched | 50 |
| | | 1.0 branches per molecule | |
| ISOFOL16 | C16 | 100% 2-alkyl branched | 50 |
| | | 1.0 branches per molecule | |
| ISOFOL20 | C20 | 100% 2-alkyl branched | 150 |
| | | 1.0 branches per molecule | |
| ISOFOL20 | C20 | 100% 2-alkyl branched | 100 |
| | | 1.0 branches per molecule | |
| ISOFOL20 | C20 | 100% 2-alkyl branched | 50 |
| | | 1.0 branches per molecule | |
| ISOFOL20 | C20 | 100% 2-alkyl branched | 20 |
| | | 1.0 branches per molecule | |
| ISOFOL24 | C24 | 100% 2-alkyl branched | 50 |
| | | 1.0 branches per molecule | |
| ISOFOL32 | C32 | 100% 2-alkyl branched | 54 |
| | | 1.0 branches per molecule | |
| MARLIPAL TDA (isotridecanol) | C13 | Branched | 50 |
| | | 2.30 branches per molecule | |
| ALFOL12 | C12 | linear | 50 |
| ALFOL C20+ | C20+ | linear | 50 |

The amount of branching was determined by proton nuclear magnetic resonance (NMR). All examples represented by trade names above are marketed by Sasol Performance Chemicals.

Table 2 shows the commercial prior art defoamers that were used for comparative experiments.

**Table 2: Defoamers from the prior art used for comparative examples**

| **Name** | **Description** |
|---|---|
| PDMS-2500 | Polydimethyl siloxane mol wt = 2500, viscosity = 20,000 cP |
| (C-2785)* | Polydimethyl siloxane defoamer formulation |
| PEG-50EO | Polyethylene glycol - 50EO |
| PPG-900 | Polypropylene glycol mol |
| | wt = 900 |
| (C-2398)* | Polypropylene defoamer formulation |
| (C-2280)* | Polypropylene defoamer formulation |

| | |
|---|---|
| *Sold by New London Chemicals, Inc. Florida, USA | |

### EXPERIMENTAL SECTION

### EXPERIMENT 1: Thermal stability

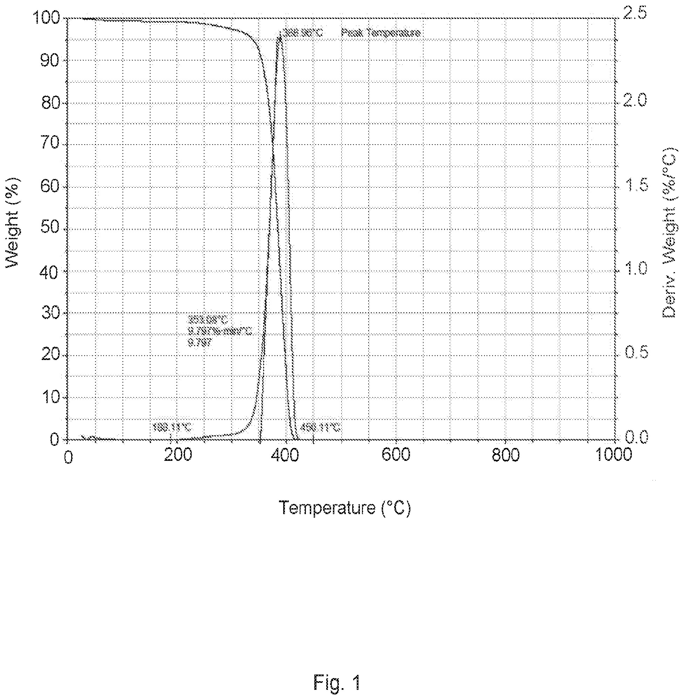

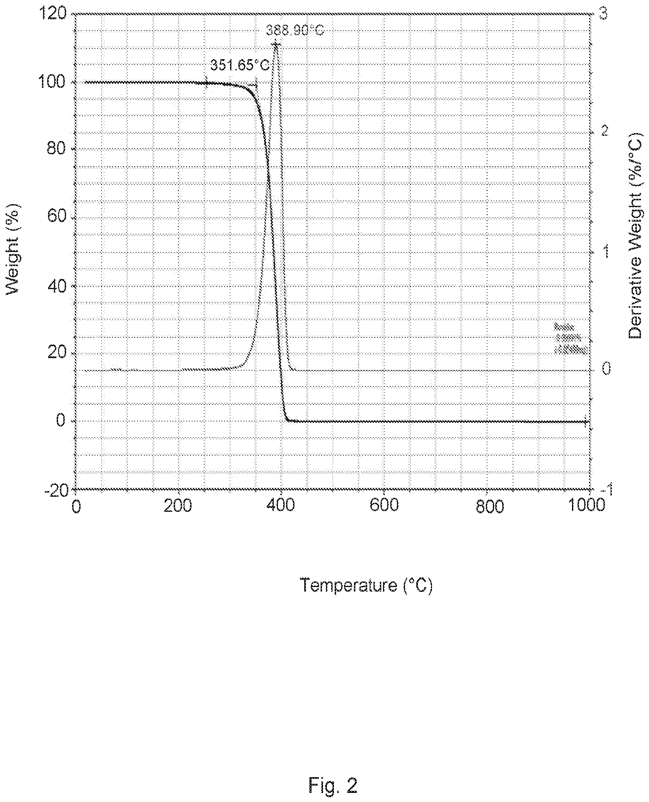

Thermogravimetric analysis (TGA) measurements were made using a TGA Q 500 TA instrument. About 30 mg of sample was heated in a N₂ atmosphere at a rate of 9.8 °C / min. Thermogravimetric data for two representative alcohol ethoxylates, namely ISOFOL 2426S -50 EO and ISOFOL 32-54EO are shown Figures 1 and 2.

As can be observed, the ISOFOL 2426 - 50 EO alcohol ethoxylate is thermally stable up to 354°C, and the ISOFOL 32 - 54 EO alcohol ethoxylate is thermally stable up to 351 °C. These temperatures define the thermal window for specifically the use of the 2-alkyl branched alcohol high mole ethoxylates.

### EXPERIMENT 2: Gas/non-aqueous phase interfacial tension

### Experimental Procedure:

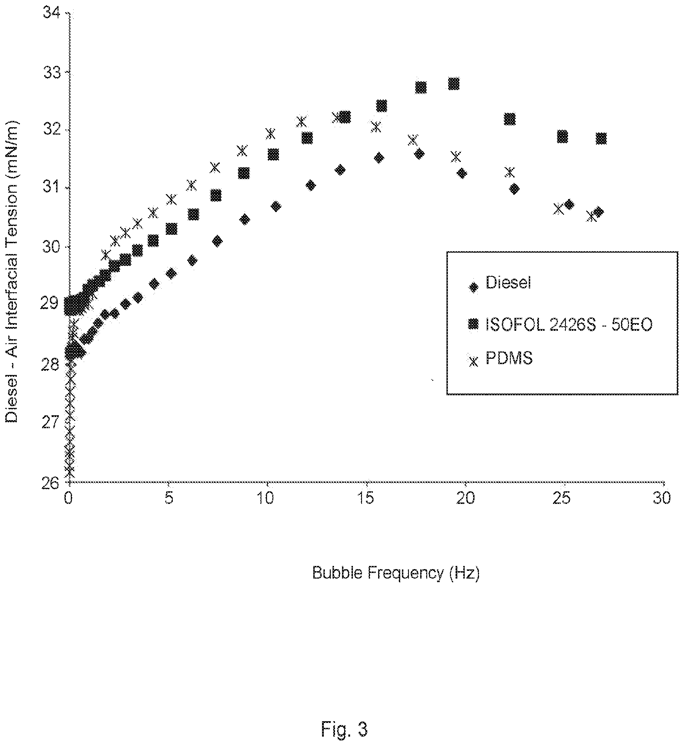

Dynamic interfacial tension (IFT) measurements were made using a Kruss BP-100 bubble pressure tensiometer. Diesel was used as the non-aqueous phase and air was the gas. Air was bubbled through diesel and IFT determined as a function of bubble frequency. A defoamer dispersion at 1 wt% concentration was made in diesel. About 0.6ml of defoamer dispersion was added to 70ml of diesel at ambient room temperature and IFT measured as a function of bubble frequency. The defoamers tested were ISOFOL 2426S - 50 EO and PDMS (2500 molecular weight sample obtained from Dow Chemicals). Dynamic IFT data is given in Figure 3.

As can be observed from the IFT data ISOFOL 2426S - 50EO *increases* the IFT of diesel over the range of bubble frequency measured. The ability of the defoamer to *increase* the IFT of the gas/non-aqueous phase is a key requirement for the non-ionic surfactant to perform as a defoamer. The laboratory data disclosed herein demonstrates this property. Comparative data for PDMS is also shown in Figure 2. The ability for ISOFOL 2426S - 50EO to increase the IFT over the full range of bubble frequency is unique. PDMS also increases the IFT as to be expected. However, we observe ISOFOL 2426S performs better at higher bubble frequency compared to PDMS with respect to IFT increase.

Solubility, thermal stability and IFT results collectively indicate that ISOFOL 2426S - 50EO possesses the fundamental properties required to break / destabilize nonaqueous foam. These results can be extrapolated to the 2-alkyl-1-alkanol alkoxylate compounds of the present invention.

### Defoamer / Antifoamer Performance Evaluation

### Laboratory Performance Evaluation Method

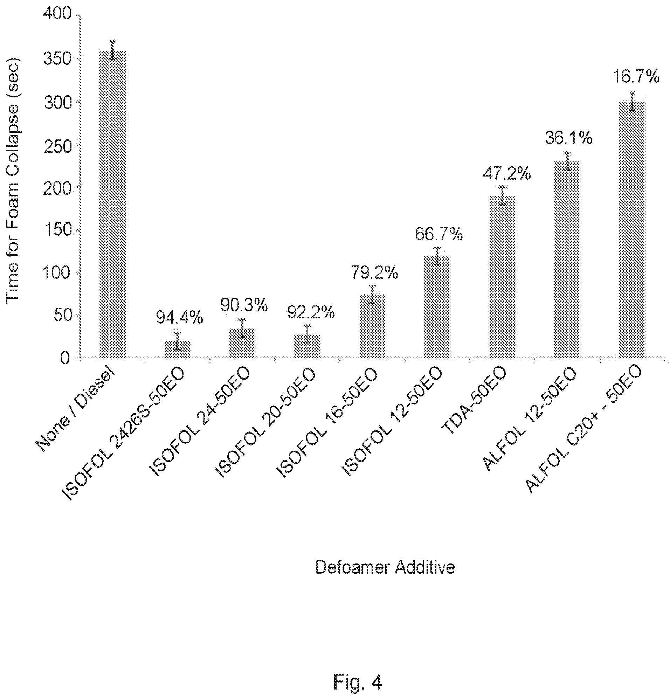

A simple laboratory test was designed to rapidly screen defoamers/antifoamers for non-aqueous defoaming performance at room temperature. The non-aqueous defoamer/antifoamer test procedure comprised the steps of: introducing 10 ml of a non-aqueous liquid (diesel) into a 20 ml glass test tube to create a head space of 8 cc, adding the defoamer / antifoamer additive ( at 1 to 10 wt% treat rate) to the non-aqueous liquid, tightly closing the test tube, shaking the test tube by hand for 5 minutes to produce non-aqueous foam, setting the test tube on a lab bench, and taking photographs of the test tube every 15 seconds for about 10 to 15 minutes, or until there is no more foam in the test tube. From the time-lapse photography the time taken for the non-aqueous foam to completely collapse was determined. The pictures were examined to ascertain the nature of foam and coalescence stages. The performance test was conducted at least 5 times and the average foam collapse time determined. The effectiveness of a defoamer additive was calculated as a percentage of the time measured for foam collapse when the defoamer additive was added to the diesel, relative to the time for foam collapse when no additive was added to the diesel. An effective defoamer is characterized by a percentage value of between approximately 50 - 100%. The effectiveness value is shown as a percentage value at the top of each bar in the bar graphs of the Figures (for example, in the results shown in Figure 4, TDA-50EO was 47.2% effective while ISOFOL 2426S - 50EO was 94.4% effective). This general experimental procedure was used for all the following experiments described, except if specifically noted otherwise.

### EXPERIMENT 3: Influence of Hydrocarbon Chain Structure (linearity / branching / type of branching / length of carbon chain)

To determine the influence of the nature of the hydrocarbon chain structure on defoamer / antifoamer performance, a series of 50 mole ethoxylates (1 wt%) of the following alcohols were evaluated using the general Laboratory Performance Evaluation Method described above: ISOFOL 12, ISOFOL 16, ISOFOL 20, ISOFOL 24, ISOFOL 2426S, TDA, ALFOL12, and ALFOL C20+.

Results are shown in Figure 4.

It was observed that hydrocarbon chain structure influences performance. Specifically, hydrocarbon chain branching improved defoamer/antifoamer performance when compared to linear carbon chain structures. Amongst the branched ISOFOL ethoxylates, increasing the hydrocarbon chain length had a marked influence on performance. A hydrocarbon chain length of 20 carbons or more with a 2-alkyl branching structure resulted in the best performance.

### EXPERIMENT 4: Influence of Number of EO Groups

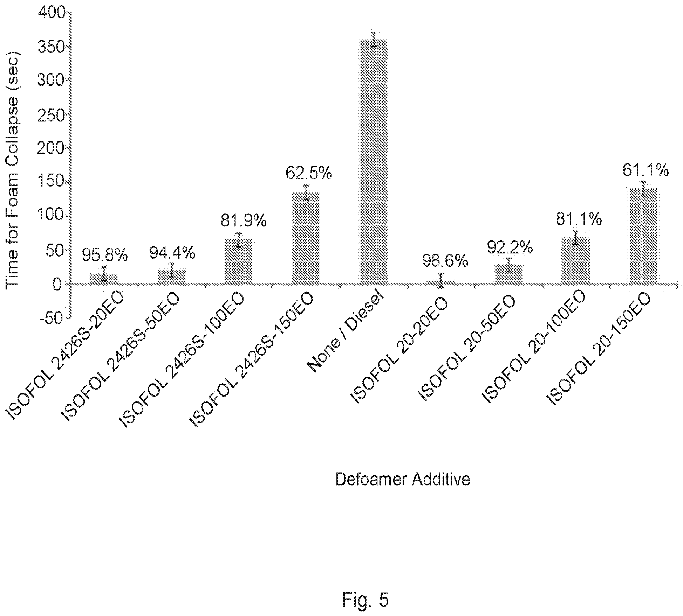

To ascertain the influence of the number of EO groups or degree of ethoxylation on defoamer / antifoamer performance, 20, 50, 100 and 150 mole ethoxylates of ISOFOL 20 and ISOFOL 2426S were tested (1 wt% dosage), using the general Laboratory Performance Evaluation Method. ISOFOL 20 and ISOFOL 2426S were selected based on their superior performance from the earlier experiment. Results are shown in Figure 5.

Decreasing the number of EO groups from 150 to 20 improved defoamer/antifoamer performance. The optimum number of EO groups was 20 to 50.

### EXPERIMENT 5: Effect of End Capping EO Group with 1PO (example not according to the invention)

Using the general Laboratory Performance Evaluation Method, the effect of end capping the ethoxylate with a propoxylate (1 PO) on defoamer / antifoamer performance was tested by synthesizing end capped ISOFOL 2426S50EO with 1 PO and testing the end capped polymer (1 wt% dosage).

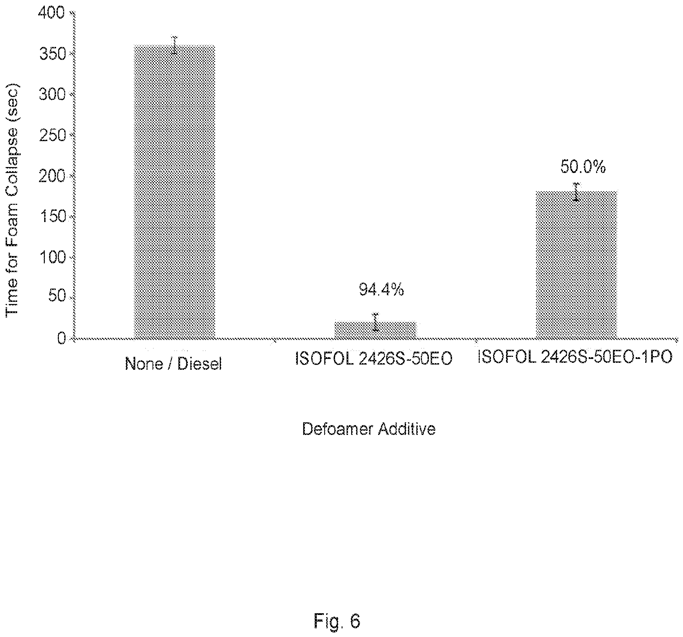

The result shown in Figure 6 indicated that end capping the ISOFOL 2426S-50EO ethoxylate with 1 PO does not improve performance. On the contrary, the presence of the PO group decreased performance.

### EXPERIMENT 6: Effect of Concentration

The effect of defoamer/antifoamer concentration on performance was evaluated (using the general Laboratory Performance Evaluation Method) by varying the concentration of ISOFOL 20-20EO from 10 to 1 wt%. Defoamers are used to defoam / break existing foams. They are applied / sprayed directly on the foam and as such the local concentration of the defoamer in the liquid lamellae is high. Antifoamers are used to prevent formation of foam and are added to the non-aqueous liquid in small quantities. Thus, effectiveness at low concentration is indicative of antifoaming performance and while effectiveness at high concentration is indicative of defoamer performance.

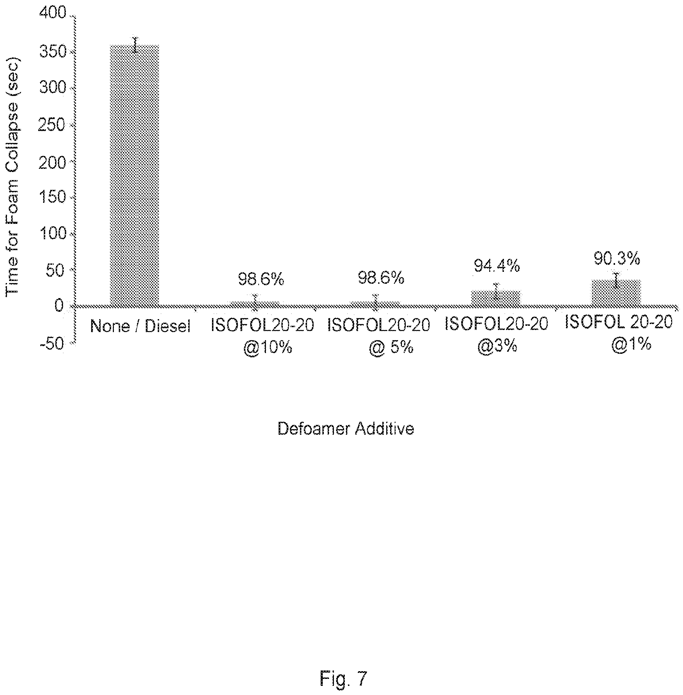

As shown in Figure 7, ISOFOL 20-20EO was effective over the range of concentrations tested, indicating its suitability as a defoamer or antifoamer.

### EXPERIMENT 7: importance of the 2-alkvl-1-alkanol (Guerbet) ethoxylate molecular structure vs the corresponding alcohol structure

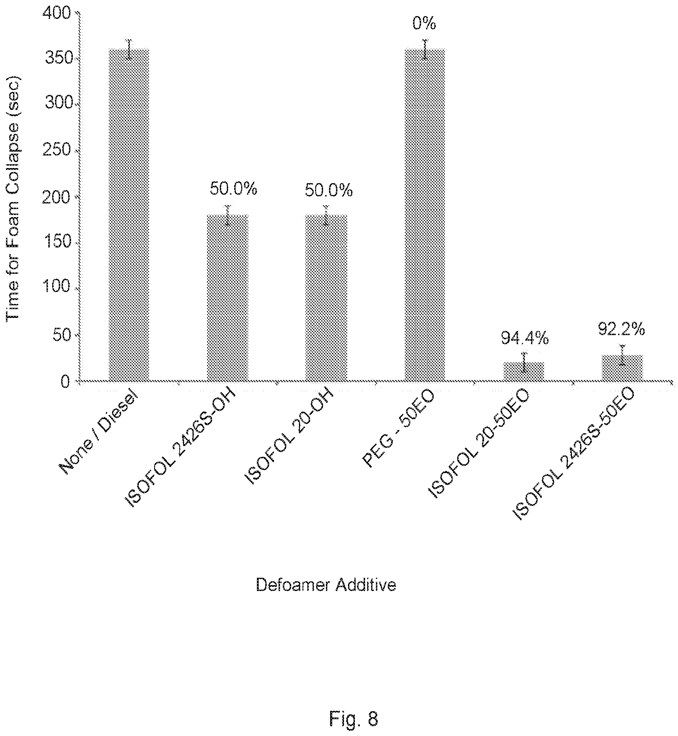

In order to determine the importance of a 2-alkyl - alkanol (or so-called Guerbet-alcohol derived) ethoxylate molecular structure on defoamer / antifoamer performance, the performance of ISOFOL 20 alcohol,
ISOFOL 2426S alcohol and polyethylene (50) glycol were compared to that of ISOFOL 20-50EO and ISOFOL 2426S-50EO in Figure 8. The general Laboratory Performance Evaluation Method was applied.

Results shown in Figure 8 clearly demonstrate the importance of a 2-alkyl 1-alkanol ethoxylate molecular structure. Neither the alcohols by themselves nor the PEG-50 were effective as defoamers/antifoamers compared to the corresponding 2-alkyl branched ethoxylated alcohols.

### EXPERIMENT 8: Comparison of 2-alkyl-1-alkanol ethoxylates with commercially available defoamers

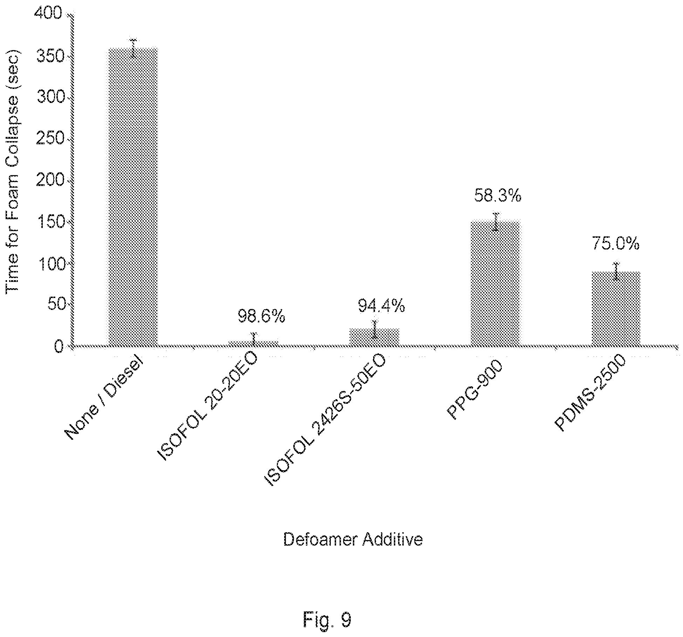

The performance of ISOFOL 20-20EO and ISOFOL 2426S-50EO were compared to commercially available defoamers, PDMS-2500 and PPG-900 (general Laboratory Performance Evaluation Method). Results are shown in Figure 9.

ISOFOL 20-20EO and ISOFOL 2426S-50EO exhibited better defoamer / antifoamer performance compared to PPG and PDMS of comparable molecular weight. This result demonstrates the effectiveness of the 2-alkyl-1-alkanol ethoxylate over polydimethyl siloxane and polypropylene glycol from a molecular structure fundamentals perspective.

### EXPERIMENT 9: Comparison of 2-alkyl-1-alkanol ethoxylates with commercial defoamer formulations

The defoamer / antifoamer performances of ISOFOL 20-20EO, ISOFOL 24-50, and ISOFOL 2426S-50EO were compared to commercially available, fully formulated PDMS based (C-2785) and polypropylene based defoamers (C-2398 and C-2280).

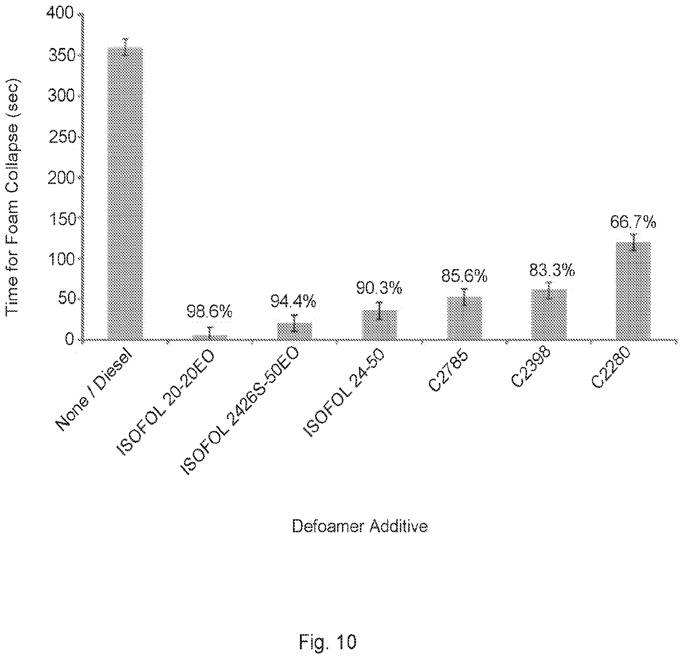

Results obtained by using the general Laboratory Performance Evaluation Method are shown in Figure 10.

ISOFOL 24-50EO exhibited performance equal to, and ISOFOL 20-20EO & ISOFOL 2426S-50EO exhibited performance better than the commercial defoamers C-2785, C-2398 and C-2280.

### EXPERIMENT 10: Defoaming performance of 2-alkyl-1-lkanol alkoxylates at different temperatures

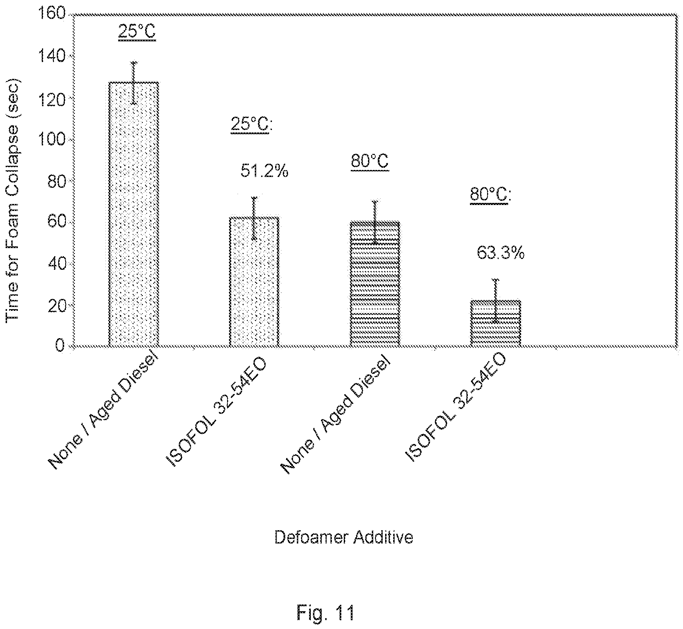

To determine the influence of temperature on defoamer / antifoamer performance, ISOFOL 32-54EO (1 wt%) was evaluated at 25 and 80°C, using the general Laboratory Performance Evaluation Method described earlier. An aged diesel sample was used as non-aqueous liquid. Results are shown in Figure 11.

It is clear that the ISOFOL 32-54EO exhibited effective defoaming / antifoaming behaviour when added to the non-aqueous liquid, compared to the control experiment where no defoamer was added - both at 25 and 80°C.

### EXPERIMENT 11: Direct injection Test: Comparison of 2-alkyl-1-alkanol ethoxylates with commercial defoamers

A room temperature direct injection laboratory test was developed to compare the performance of the 2-alkyl-1-alkanol ethoxylates to commercial defoamers. The intent of this direct injection laboratory test was to mimic field process operations wherein defoamers are directly injected on the non-aqueous foam. The test procedure comprised adding diesel to a cylindrical glass jar, closing the jar and vigorously shaking to produce foam. The defoamer was then injected directly on the non-aqueous foam and foam collapse monitored by video recording or time lapse photographs.

Diesel foam was created by vigorously shaking 25 ml of diesel placed in a 100 ml glass jar. Using a syringe, 0.25 ml of defoamer solutions were injected on the foam. In a comparative experiment the following solutions were tested:
(i) Control: toluene,
(ii) Commercial Defoamer: 1wt% C2785 in toluene, and
(iii) 1wt% ISOFOL 2426S-50EO in toluene.

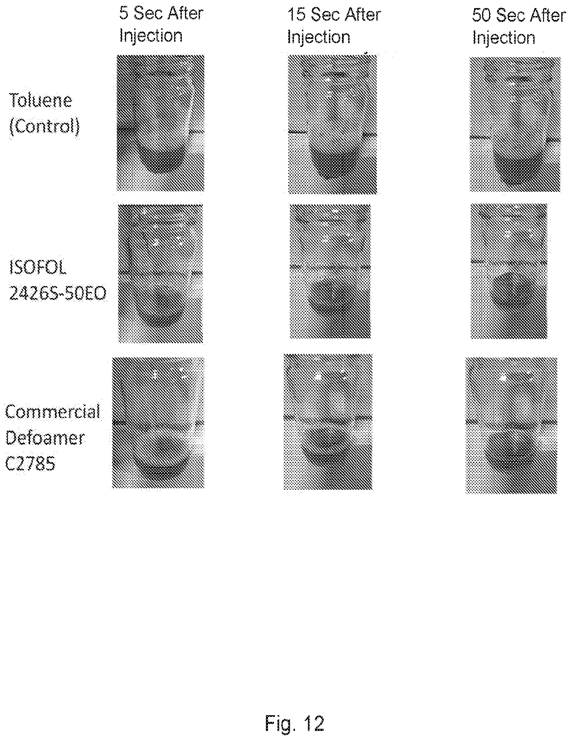

Figure 12 shows time lapse photographs of the control, ISOFOL 2426S - 50EO, and commercial defoamer C2785 respectively after 5, 15 and 50 seconds after injection.

Toluene had no effect on destabilizing the foam. ISOFOL 2426S-50EO was very effective in defoaming the non-aqueous foam. In about 50 seconds after defoamer contact, the foam collapsed completely.

## Claims

1. A use of a foam-controlling composition for defoaming non-aqueous foams, the prevention of foam formation, and / or the deaeration of various feeds, wherein said nonaqueous foam comprises a non-aqueous phase and a gas, and wherein said foam-controlling composition comprises:
i) a non-ionic surfactant, wherein said non-ionic surfactant has a molecular structure as shown in [I]:
R¹-CH(R²)-CH₂-O-(A'O)ₘ(A"O)ₙ-H [I]
wherein
R¹ is an alkyl group having from 5 to 16 carbon atoms,
R² is an alkyl group having from 5 to 16 carbon atoms,
A'O is an ethoxy (EO) group,
A"O is an ethoxy (EO) group,
m = 0 - 10,
n = 20 - 150, and
ii) a solvent.

2. The use of the composition of claim 1 wherein R¹ and / or R² is a linear alkyl group.

3. The use of the composition of claim 1 wherein R¹ and / or R² is a branched alkyl group.

4. The use of the composition of any of the claims above wherein R¹ and / or R² has from 9 to 16 carbon atoms.

5. The use of the composition of any of the claims above wherein m = 0.

6. The use of the composition of any of the claims above wherein n = 20 to 50.

7. The use of the composition of any of the claims above wherein the solvent comprises a selection from the group of toluene, xylene, hexane, heptane, octane, nonane, decane, undecane, dodecane, diesel, ethanol, propanol, butanol, pentanol of mixtures thereof.

8. The use of the composition of any of the claims above wherein the gas comprises a selection of the group of methane, ethane, propane, butane, pentane, air, nitrogen, carbon dioxide, carbon monoxide, hydrogen sulfide, hydrogen, argon, or mixtures thereof.

9. The use of the composition of any of the claims above wherein the non-aqueous phase comprises a selection from the group of diesel, including Fischer-Tropsch derived diesel, crude oil or crude oil distillates with carbon numbers from 12 to 50 or mixtures thereof.

10. The use of the composition of any of the claims above wherein the non-ionic surfactant is thermally stable from 20°C to at least 350°C.

11. The use of the composition of any of the claims above wherein the gas / non-aqueous phase interfacial tension is increased by at least 1 mN/m at a temperature from 20°C to at least 350°C.

12. The use of the composition of any of the claims above wherein the addition of the non-ionic surfactant leads to an increase in effective foam reduction of between 50 and 100 %, preferably of between 60 and 100%, most preferably of between 70 and 100%, the effectiveness of the non-ionic surfactant calculated as a percentage of the time measured for foam collapse when the non-ionic surfactant was added to the non-aqueous phase, relative to the time for foam collapse when no non-ionic surfactant was added to the non-aqueous phase.

13. A method of defoaming a non-aqueous foam, said non-aqueous foam comprising a non-aqueous phase and a gas, or preventing foaming in a non-aqueous material, or deaerating a non-aqueous material, said method comprising:
providing a foam-controlling composition comprising:
i) a non-ionic surfactant, wherein said non-ionic surfactant has a molecular structure as shown in [I]:
R¹-CH(R²)-CH₂-O-(A'O)ₘ(A"O)ₙ-H [I]
wherein R¹ is a linear or branched alkyl group having from 5 to 16 carbon atoms,
R² is a linear or branched alkyl group having from 5 to 16 carbon atoms,
A'O is an ethoxy (EO) group,
A"O is an ethoxy (EO) group,
m = 0 - 10,
n = 20 - 150,
ii) a solvent; and
contacting said non-aqueous foam or said non-aqueous material with said composition.

## Patentansprüche

1. Verwendung einer schaumregulierenden Zusammensetzung zum Entschäumen nichtwässriger Schäume, zur Verhinderung von Schaumbildung und / oder zur Entgasung verschiedener Beschickungen, wobei der nichtwässrige Schaum eine nichtwässrige Phase und ein Gas umfasst, und wobei die schaumregulierende Zusammensetzung umfasst:
i) ein nicht-ionisches Tensid, wobei das nicht-ionische Tensid eine Molekülstruktur aufweist wie dargestellt in [I]:
R¹-CH(R²)-CH₂-O-(A'O)ₘ(A"O)ₙ-H [I]
worin
R¹ eine Alkylgruppe mit 5 bis 16 Kohlenstoffatomen ist,
R² eine Alkylgruppe mit 5 bis 16 Kohlenstoffatomen ist,
A'O eine Ethoxygruppe (EO) ist,
A"O eine Ethoxygruppe (EO) ist,
m = 0 - 10,
n = 20 - 150, und
ii) ein Lösungsmittel.

2. Verwendung der Zusammensetzung nach Anspruch 1, wobei R¹ und / oder R² eine lineare Alkylgruppe ist.

3. Verwendung der Zusammensetzung nach Anspruch 1, wobei R¹ und / oder R² eine verzweigte Alkylgruppe ist.

4. Verwendung der Zusammensetzung nach einem der vorherigen Ansprüche, wobei R¹ und / oder R² 9 bis 16 Kohlenstoffatome aufweist.

5. Verwendung der Zusammensetzung nach einem der vorherigen Ansprüche, wobei m = 0 ist.

6. Verwendung der Zusammensetzung nach einem der vorherigen Ansprüche, wobei n = 20 bis 50 ist.

7. Verwendung der Zusammensetzung nach einem der vorherigen Ansprüche, wobei das Lösungsmittel eine Auswahl aus der Gruppe von Toluol, Xylol, Hexan, Heptan, Octan, Nonan, Decan, Undecan, Dodecan, Diesel, Ethanol, Propanol, Butanol, Pentanol oder Mischungen davon umfasst.

8. Verwendung der Zusammensetzung nach einem der vorherigen Ansprüche, wobei das Gas eine Auswahl aus der Gruppe von Methan, Ethan, Propan, Butan, Pentan, Luft, Stickstoff, Kohlenstoffdioxid, Kohlenstoffmonoxid, Schwefelwasserstoff, Wasserstoff, Argon oder Mischungen davon umfasst.

9. Verwendung der Zusammensetzung nach einem der vorherigen Ansprüche, wobei die nichtwässrige Phase eine Auswahl aus der Gruppe von Diesel, einschließlich von Fischer-Tropsch-basiertem Diesel, Rohöl oder Rohöldestillaten mit Kohlenstoffzahlen von 12 bis 50 oder Mischungen davon umfasst.

10. Verwendung der Zusammensetzung nach einem der vorherigen Ansprüche, wobei das nichtionische Tensid von 20°C bis mindestens 350°C thermisch stabil ist.

11. Verwendung der Zusammensetzung nach einem der vorherigen Ansprüche, wobei die Grenzflächenspannung zwischen Gas / nichtwässriger Phase um mindestens 1 mN/m bei einer Temperatur von 20°C bis mindestens 350°C erhöht ist.

12. Verwendung der Zusammensetzung nach einem der vorherigen Ansprüche, wobei die Zugabe des nichtionischen Tensid zu einem Anstieg der effektiven Schaumreduktion zwischen 50 und 100 %, bevorzugt zwischen 60 und 100% und am meisten bevorzugt zwischen 70 und 100% führt, wobei die Effektivität des nichtionischen Tensids als prozentualer Anteil der Zeit berechnet wird, die für den Schaumzusammenbruch gemessen wird, wenn das nichtionische Tensid zur nichtwässrigen Phase hinzugegeben wurde relativ zu der Zeit für den Schaumzusammenbruch wenn kein nichtionisches Tensid zur nichtwässrigen Phase hinzugegeben wurde.

13. Verfahren zum Entschäumen eines nichtwässrigen Schaums, wobei der nichtwässrige Schaum eine nichtwässrige Phase und ein Gas umfasst, oder zum Verhindern von Schäumen in einem nichtwässrigen Material, oder zum Entgasen eines nichtwässrigen Materials, wobei das Verfahren umfasst:
Bereitstellen einer schaumkontrollierenden Zusammensetzung, umfassend:
i) ein nicht-ionisches Tensid, wobei das nicht-ionische Tensid eine Molekülstruktur aufweist wie dargestellt in [I]:
R¹-CH(R²)-CH₂-O-(A'O)ₘ(A"O)ₙ-H [I]
worin R¹ eine lineare oder verzweigte Alkylgruppe mit 5 bis 16 Kohlenstoffatomen ist,
R² eine lineare oder verzweigte Alkylgruppe mit 5 bis 16 Kohlenstoffatomen ist,
A'O eine Ethoxygruppe (EO) ist,
A"O eine Ethoxygruppe (EO) ist,
m = 0 - 10,
n = 20 - 150,
i) ein Lösungsmittel; und
Inkontaktbringen des nichtwässrigen Schaums oder des nichtwässrigen Materials mit der Zusammensetzung.

## Revendications

1. Utilisation d'une composition de lutte contre la mousse pour démousser des mousses non aqueuses, la prévention de la formation de mousse, et/ou la désaération de diverses charges d'alimentation, dans laquelle ladite mousse non aqueuse comprend une phase non aqueuse et un gaz, et dans laquelle ladite composition de lutte contre la mousse comprend :
i) un tensioactif non ionique, ledit tensioactif non ionique ayant une structure moléculaire telle que montrée au [I] :
R¹-CH(R²)-CH₂-O-(A'O)ₘ(A"O)ₙ-H [I]
dans laquelle
R¹ est un groupe alkyle ayant de 5 à 16 atomes de carbone,
R² est un groupe alkyle ayant de 5 à 16 atomes de carbone,
A'O est un groupe éthoxy (OE),
A"O est un groupe éthoxy (OE),
m = 0 - 10,
n = 20 - 150, et
ii) un solvant.

2. Utilisation de la composition selon la revendication 1, dans laquelle R¹ et/ou R² est un groupe alkyle linéaire.

3. Utilisation de la composition selon la revendication 1, dans laquelle R¹ et/ou R² est un groupe alkyle ramifié.

4. Utilisation de la composition selon l'une quelconque des revendications précédentes, dans laquelle R¹ et/ou R² ont de 9 à 16 atomes de carbone.

5. Utilisation de la composition selon l'une quelconque des revendications précédentes, dans laquelle m = 0.

6. Utilisation de la composition selon l'une quelconque des revendications précédentes, dans laquelle n = 20 à 50.

7. Utilisation de la composition selon l'une quelconque des revendications précédentes, dans laquelle le solvant comprend une sélection à partir du groupe constitué par toluène, xylène, hexane, heptane, octane, nonane, décane, undécane, dodécane, diesel, éthanol, propanol, butanol, pentanol ou mélanges de ceux-ci.

8. Utilisation de la composition selon l'une quelconque des revendications précédentes, dans laquelle le gaz comprend une sélection à partir du groupe constitué par méthane, éthane, propane, butane, pentane, air, azote, dioxyde de carbone, monoxyde de carbone, sulfure d'hydrogène, hydrogène, argon ou mélanges de ceux-ci.

9. Utilisation de la composition selon l'une quelconque des revendications précédentes, dans laquelle la phase non aqueuse comprend une sélection à partir du groupe constitué par diesel, y compris diesel dérivé de Fischer-Tropsch, pétrole brut ou distillats de pétrole brut avec des nombres de carbone allant de 12 à 50 ou des mélanges de ceux-ci.

10. Utilisation de la composition selon l'une quelconque des revendications précédentes, dans laquelle le tensioactif non ionique est thermiquement stable de 20°C à moins de 350°C.

11. Utilisation de la composition selon l'une quelconque des revendications précédentes, dans laquelle la tension interfaciale gaz/phase non aqueuse est accrue d'au moins 1 mN/m à une température allant de 20°C à au moins 350°C.

12. Utilisation de la composition selon l'une quelconque des revendications précédentes, dans laquelle l'addition du tensioactif non ionique conduit à une hausse de la réduction effective de la mousse d'entre 50 et 100 %, de préférence d'entre 60 et 100 %, de manière la mieux préférée d'entre 70 et 100 %, l'efficacité du tensioactif non ionique a été calculée en tant que pourcentage du temps mesuré pour l'effondrement de la mousse lorsque le tensioactif non ionique a été ajouté à la phase non aqueuse, par rapport au temps pour l'effondrement de la mousse lorsque aucun tensioactif non ionique n'a été ajouté à la phase non aqueuse.

13. Procédé de démoussage d'une mousse non aqueuse, ladite mousse non aqueuse comprenant une phase non aqueuse et un gaz, ou de prévention du moussage dans une matière non aqueuse, ou de désaération d'une matière non aqueuse, ledit procédé comprenant :
la fourniture d'une composition de lutte contre la mousse comprenant :
i) un tensioactif non ionique, ledit tensioactif non ionique ayant une structure moléculaire telle que montrée au [1] :
R¹-CH(R²)-CH₂-O-(A'O)ₘ(A"O)ₙ-H [1]
dans laquelle
R¹ est un groupe alkyle linéaire ou ramifié ayant de 5 à 16 atomes de carbone,
R² est un groupe alkyle linéaire ou ramifié ayant de 5 à 16 atomes de carbone,
A'O est un groupe éthoxy (OE),
A"O est un groupe éthoxy (OE),
m = 0 - 10,
n = 20 - 150,
ii) un solvant ; et
la mise en contact de ladite mousse non aqueuse ou de ladite matière non aqueuse avec ladite composition.
